(19) Europäisches Patentamt
European Patent Office
Office européen des brevets

(11) **EP 2 301 128 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(21) Anmeldenummer: **08785031.9**

(22) Anmeldetag: **17.07.2008**

(51) Int Cl.:
*H02H 3/40* (2006.01)  *H02H 1/04* (2006.01)

(86) Internationale Anmeldenummer:
**PCT/EP2008/006078**

(87) Internationale Veröffentlichungsnummer:
**WO 2010/006632 (21.01.2010 Gazette 2010/03)**

(54) **VERFAHREN ZUM ERZEUGEN EINES FEHLERSIGNALS UND ELEKTRISCHES SCHUTZGERÄT**

METHOD FOR PRODUCING A FAULT SIGNAL AND ELECTRIC PROTECTIVE DEVICE

PROCÉDÉ DE PRODUCTION D'UN SIGNAL D'ERREUR ET APPAREIL ÉLECTRIQUE DE PROTECTION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**30.03.2011 Patentblatt 2011/13**

(73) Patentinhaber: **Siemens Aktiengesellschaft 80333 München (DE)**

(72) Erfinder: **YELGIN, Yilmaz 13589 Berlin (DE)**

(56) Entgegenhaltungen:
**DE-A1- 4 100 646      JP-A- 7 298 499**
**JP-A- 2005 168 108      US-A1- 2003 039 086**

**Beschreibung**

Die Erfindung betrifft ein Verfahren gemäss Anspruch 1. Elektrische Energieversorgungsnetze werden üblicherweise abschnittsweise mit sogenannten Schutzgeräten auf unzulässige Betriebszustände, wie beispielsweise Kurzschlüsse oder Erdschlüsse, überwacht. Beim Auftreten eines solchen unzulässigen Betriebszustands trennen die Schutzgeräte den von dem Fehler betroffenen Teil des Energieversorgungsnetzes vom restlichen Netz durch Öffnen entsprechender Leistungsschalter ab und vermeiden so eine Gefährdung für Personen und Komponenten des elektrischen Energieversorgungsnetzes. Zur Überwachung der einzelnen Abschnitte des elektrischen Energieversorgungsnetzes führen die Schutzgeräte sogenannte Schutzalgorithmen aus. Hierbei wird unter Verwendung von Messwerten, bei denen es sich beispielsweise um den Strom und die Spannung an einer Messstelle des elektrischen Energieversorgungsnetzes charakterisierende Messwerte handeln kann, eine Entscheidung darüber getroffen, ob ein unzulässiger oder ein zulässiger Betriebszustand vorliegt.

Ein häufig in diesem Zusammenhang eingesetzter Schutzalgorithmus arbeitet nach dem sogenannten Distanzschutzverfahren, bei dem aus Strom- und Spannungsmesswerten in einer komplexen Zahlenebene liegende Impedanzwerte berechnet werden und überprüft wird, ob die Impedanzwerte innerhalb eines - auch als Auslösepolygon bezeichneten - vorgegebenen Bereiches liegen. Sofern die Impedanzwerte innerhalb dieses vorgegebenen Bereiches liegen, stellt das Distanzschutzgerät einen unzulässigen Betriebszustand an dem von ihm überwachten Abschnitt des elektrischen Energieversorgungsnetzes fest und sendet ein Auslösesignal an einen oder mehrere den Abschnitt begrenzende Leistungsschalter, um den fehlerhaften Abschnitt vom restlichen Energieversorgungsnetz zu trennen. Hierbei unterscheidet der Distanzschutzalgorithmus zwischen sogenannten internen Fehlern, die den von dem Distanzschutzgerät unmittelbar überwachten Abschnitt des Energieversorgungsnetzes betreffen, und externen Fehlern, die außerhalb dieses Abschnittes liegen und in den unmittelbaren Zuständigkeitsbereich eines anderen Schutzgeräts fallen. Während ein Distanzschutzgerät bei internen Fehlern unverzüglich eine Abschaltung seines fehlerbehafteten Abschnittes veranlassen muss, dient es bei externen Fehlern üblicherweise als Reserveschutz. Schaltet ein für den externen Fehler zuständiges anderes Schutzgerät den Fehler nicht innerhalb einer bestimmten Zeitspanne ab, so veranlasst das als Reserveschutz fungierende Distanzschutzgerät nach Abwarten dieser Zeitspanne eine Abschaltung.

Bei plötzlichen Laständerungen oder Veränderungen an der Struktur des elektrischen Energieversorgungsnetzes (beispielsweise durch Zu- oder Abschalten größerer Netzteile) kann es im elektrischen Energieversorgungsnetz zu sogenannten Pendelvorgängen bzw.

Netzpendelungen, die im Folgenden der Einfachheit halber als "Pendelungen" bezeichnet werden sollen, kommen, da sich die Generatoren an den Einspeisestellen des elektrischen Energieversorgungsnetzes auf die neue Lastsituation einstellen müssen. Dies geschieht üblicherweise in Form einer gedämpften Schwingung, bis sich der neue Arbeitspunkt des elektrischen Energieversorgungsnetzes stabilisiert hat. Während einer Pendelung pendeln Strom und Spannung sozusagen entlang der Energieversorgungsleitungen zwischen hohen und niedrigen Werten. Daher kann es bei einer Pendelung häufig vorkommen, dass ein elektrisches Distanzschutzgerät an seiner Messstelle niedrige Spannungen bei gleichzeitig hohen Strömen misst und daraus geringe Impedanzwerte berechnet, die innerhalb eines Auslösepolygons liegen. Da eine gedämpfte - auch als synchron bezeichnete - Pendelung üblicherweise jedoch keinen gefährlichen Betriebszustand des elektrischen Energieversorgungsnetzes beschreibt, soll in einem solchen Fall keine Auslösung erfolgen. Bei bloßer Anwendung der Distanzschutzfunktion würde das Distanzschutzgerät jedoch einen unzulässigen Betriebszustand erkennen, und den überwachten Abschnitt des elektrischen Energieversorgungsnetzes abschalten. Hierdurch können ungewollte Fehlabschaltungen bestimmter Teile des elektrischen Energieversorgungsnetzes stattfinden, die üblicherweise für den Betreiber des elektrischen Energieversorgungsnetzes mit hohen Kosten verbunden sind. Außerdem kann durch die sich durch die Fehlabschaltung sprunghaft verändernde Netzstruktur eine Überlastung noch eingeschalteter Abschnitte des elektrischen Energieversorgungsnetzes erfolgen, was zu kaskadierenden Abschaltungen bis hin zu einem sogenannten Blackout führen kann.

Der Vollständigkeit halber soll an dieser Stelle erwähnt werden, dass die später beschriebene Erfindung sowohl bei synchronen Pendelungen als auch bei sogenannten asynchronen Pendelungen eingesetzt werden kann, bei denen die Impedanz zumindest eine volle Kreisbahn durchläuft. Der Begriff "Pendelungen" soll daher im Folgenden in diesem Sinne (synchron oder asynchron) verstanden werden.

Um bei Pendelungen ungewollte Fehlauslösungen zu vermeiden, werden üblicherweise sogenannte Pendelerkennungseinrichtungen vorgesehen. Wenn eine Pendelerkennungseinrichtung eine Pendelung erkennt, gibt sie ein Pendelsignal ab. Dieses Pendelsignal kann beispielsweise dazu verwendet werden, die Abgabe eines Auslösesignals an einen elektrischen Leistungsschalter durch ein Distanzschutzgerät zu blockieren. Eine Pendelerkennungseinrichtung kann hierbei entweder integrierter Bestandteil eines Distanzschutzgerätes sein oder eine separate Einrichtung bilden, die mit einem Distanzschutzgerät in Wirkverbindung steht.

Das Dokument US2003/039086 offenbart ein Verfahren zum Erzeugen eines Fehlersignals, das einen einpoligen oder einen zweipoligen Fehler in einem dreiphasigen elektrischen Energieversorgungsnetz anzeigt, der während einer vorliegenden elektrischen Pendelung in dem elektrischen Energieversorgungsnetz aufgetreten ist, wobei das Erzeugen des Fehlersignals erfolgt, wenn bei der Überprüfung ein Fehler erkannt worden ist. Distanzschutzgeräte mit integrierter Pendelerkennung werden von der Anmelderin beispielsweise unter dem Namen "SIPROTEC Distanzschutz 7SA6" angeboten. Die entsprechenden Geräte sind aus dem Gerätehandbuch der Siemens AG "SIPROTEC Distanzschutz 7SA6, V4.3" aus dem Jahr 2002, Bestellnummer der Siemens AG C53000-G1100-C156-3, bekannt. Im Abschnitt 2.3 "Maßnahmen bei Netzpendelungen" ist in diesem Gerätehandbuch beschrieben, dass zur Pendelerkennung ein von Impedanzwerten in einer komplexen Zahlenebene gebildeter Kurvenverlauf auf charakteristische Eigenschaften wie z.B. "Kontinuität", "Monotonie" und "sprunghaftes Verhalten" untersucht wird und anhand der Untersuchungsergebnisse im Falle einer erkannten Pendelung ein Pendelsignal erzeugt wird.

Allerdings können auch während anstehender Pendelungen interne oder externe Fehler auftreten, die von dem Schutzgerät erkannt und ggf. abgeschaltet werden müssen. Da sich der Fehler mit der anstehenden Pendelung überlagert, ist eine Fehlererkennung häufig nur schwierig möglich. Dies betrifft z.B. einpolige oder zweipolige Fehler, d.h. Fehler, die eine oder zwei Phasen des elektrischen Energieversorgungsnetzes betreffen, da bei solchen Fehlern in mindestens einer - nicht fehlerbehafteten - Phase weiterhin eine Pendelung stattfindet, während in den fehlerbehafteten Phasen eine Überlagerung der Pendelung und des Fehlers vorliegt.

Insbesondere bei externen Fehlern kann ein von einer Pendelung überlagerter Fehler weiterhin charakteristische Eigenschaften einer Pendelung, beispielsweise einen weitgehend elliptischen Bahnkurvenverlauf der aufgenommenen Impedanzwerte, aufweisen, so dass in diesem Fall ein anstehendes Pendelsignal die Reserveschutzfunktion des Distanzschutzgerätes außer Kraft setzen würde. Aus diesem Grund können in den bekannten Distanzschutzgeräten bestimmte Zonen des Auslösepolygons, in denen die berechneten Impedanzwerte bei externen Fehlern liegen würden, auf Wunsch von der Pendelerkennung ausgenommen werden, um die Reserveschutzfunktion auch bei Pendelungen zu gewährleisten.

Außerdem können auch bestimmte von einer Pendelung überlagerte interne Fehler, insbesondere wenn sie in großer Entfernung von der Messstelle des Distanzschutzgerätes auftreten (z.B. in der Nähe der sogenannten "Kippgrenze", d.h. an der Grenze zwischen einem internen und einem externen Fehler), weiterhin charakteristische Eigenschaften einer Pendelung aufweisen, so dass ein Pendelsignal auch eine Blockierung der Schutzfunktion für unmittelbar überwachten Abschnitt des Energieversorgungsnetzes bewirken würde.

Der Erfindung liegt die Aufgabe zugrunde, eine Möglichkeit anzugeben, mit der während einer Pendelung auftretende ein- oder zweipolige Fehler mit großer Sicherheit erkannt werden können.

Diese Aufgabe wird erfindungsgemäß durch ein Verfahren der eingangs genannten Art gelöst, bei dem während der Pendelung ein Symmetriesignal erzeugt wird, das anzeigt, ob die Pendelung symmetrisch oder unsymmetrisch ist, und die Phasen des elektrischen Energieversorgungsnetzes auf einen vorliegenden Fehler überprüft werden, wobei zur Durchführung der Überprüfung das Symmetriesignal herangezogen wird. Das Fehlersignal wird erzeugt, wenn bei der Überprüfung ein Fehler erkannt worden ist.

Der besondere Vorteil des erfindungsgemäßen Verfahrens besteht darin, dass zur Durchführung der Überprüfung auf einen Fehler ein Symmetriesignal herangezogen wird, das eine Aussage über die Symmetrie der Pendelung enthält. Eine symmetrische Pendelung findet in allen drei Phasen des Energieversorgungsnetzes gleichmäßig statt, während eine unsymmetrische Pendelung in zumindest einer der Phasen abweicht oder sogar auf eine oder zwei Phasen beschränkt ist. Unsymmetrische Pendelungen können unter anderem bei solchen elektrischen Energieversorgungsleitungen auftreten, deren Parallelleitung eine einpolige Abschaltung erfahren hat (ein sogenannter "Open-Pole in der Parallelleitung"). Aufgrund von Wechselwirkungen wirkt sich diese einpolige Abschaltung in der Parallelleitung auch auf die betrachtete Energieübertragungsleitung aus und kann eine dort stattfindende Pendelung in die Unsymmetrie bringen. Durch Berücksichtigung des Symmetriesignals kann die Fehlererkennung auf den vorliegenden Zustand des Energieversorgungsnetzes zugeschnitten werden.

Konkret kann in diesem Zusammenhang vorteilhafterweise vorgesehen sein, dass das Fehlersignal die Zurücknahme eines die Pendelung anzeigenden Pendelsignals bewirkt.

Eine weitere vorteilhafte Weiterbildung des erfindungsgemäßen Verfahrens sieht vor, dass bei einem Symmetriesignal, das eine symmetrische Pendelung anzeigt, aus an dem Energieversorgungsnetz erfassten Phasenströmen die symmetrischen Komponenten in Form eines Mitsystemstroms, eines Gegensystemstroms und eines Nullsystemstroms bestimmt werden, und durch einen Vergleich dieser symmetrischen Komponenten die Überprüfung auf einen vorliegenden Fehler durchgeführt wird. Auf diese Weise kann mit sehr einfachen Mitteln ein ein- oder zweipoliger Fehler erkannt werden, da allein durch den Fehler ein unsymmetrischer Lastzustand in dem elektrischen Energieversorgungsnetz hervorgerufen wird, da die Pendelung selbst als symmetrisch erkannt worden ist und daher als Ursache für die Unsymmetrie ausgeschlossen werden kann.

Konkret kann in diesem Zusammenhang vorgesehen sein, dass zur Überprüfung die Summe aus dem Nullsystemstrom und dem Gegensystemstrom mit dem Mitsystemstrom verglichen wird, und ein Fehler erkannt wird, wenn das Produkt aus der Summe und einem Faktor den Mitsystemstrom übersteigt. Durch diesen Vergleich kann mit geringem Aufwand eine durch einen Fehler hervorgerufene Unsymmetrie erkannt und ein Fehlersignal erzeugt werden.

Vorteilhafterweise kann in diesem Zusammenhang auch vorgesehen sein, dass der Faktor dynamisch an die Höhe des Mitsystemstroms angepasst wird, wobei ein steigender Mitsystemstrom einen Anstieg bei dem Faktor bewirkt.

Bei einem eine symmetrische Pendelung anzeigenden Symmetriesignal kann ferner auch vorgesehen sein, dass zur Unterscheidung zwischen einem einpoligen und einem zweipoligen Fehler pro Phase eine Überprüfung eines Verlaufs von Impedanzwerten durchgeführt wird. Auf das Vorliegen eines Fehlers in der jeweiligen Phase wird in diesem Zusammenhang entweder geschlossen, wenn sich zumindest ein Impedanzwert der betreffenden Phase innerhalb eines Auslösebereichs in der komplexen Impedanzebene befindet und die Änderung zwischen aufeinanderfolgenden Impedanzwerten einen vorgegebenen Schwellenwert unterschreitet, oder wenn sich zumindest ein Impedanzwert der betreffenden Phase innerhalb eines Auslösebereichs in der komplexen Impedanzebene befindet und eine sprunghafte Änderung zwischen aufeinanderfolgenden Impedanzwerten aufgetreten ist. Durch diese phasenweise Überprüfung kann der Fehler besonders einfach eingegrenzt werden.

Bei einem Symmetriesignal, das eine unsymmetrische Pendelung anzeigt, kann das Kriterium der symmetrischen Komponenten nicht verwendet werden. Daher wird gemäß einer weiteren vorteilhaften Ausführungsform des erfindungsgemäßen Verfahrens vorgeschlagen, dass bei einem Symmetriesignal, das eine unsymmetrische Pendelung anzeigt, für jede Phase ein Verlauf von Impedanzwerten bestimmt wird und anhand dieses Verlaufs auf das Vorliegen eines Fehlers in der jeweiligen Phase geschlossen wird. Aufgrund der phasenweisen Überprüfung der Impedanzen ist dieses Fehlererkennungsverfahren zwar rechenintensiver als die Betrachtung der symmetrischen Komponenten im Falle einer symmetrischen Pendelung. Allerdings kann auf diese Weise zuverlässig ein Fehler in der jeweiligen Phase erkannt werden.

Konkret kann hierbei vorgesehen sein, dass auf das Vorliegen eines Fehlers in der jeweiligen Phase geschlossen wird, wenn sich entweder zumindest ein Impedanzwert der betreffenden Phase innerhalb eines Auslösebereichs in der komplexen Impedanzebene befindet und die Änderung zwischen aufeinanderfolgenden Impedanzwerten einen vorgegebenen Schwellenwert unterschreitet oder sich zumindest ein Impedanzwert der betreffenden Phase innerhalb eines Auslösebereichs in der komplexen Impedanzebene befindet und eine sprunghafte Änderung zwischen aufeinanderfolgenden Impedanzwerten aufgetreten ist. Auf diese Weise kann durch relativ einfache Überprüfungen ein Fehler erkannt werden. Das erstgenannte Kriterium weist hierbei darauf hin, dass sich aufeinanderfolgende Impedanzwerte kaum voneinander unterscheiden und die Impedanz quasi einen stationären Wert, nämlich den der Fehlerimpedanz, angenommen hat. Das zweite Kriterium weist auf einen Sprung von einem beliebigen Arbeitspunkt während einer Pendelung zu einer Fehlerimpedanz hin.

Ein externer Fehler sollte von dem jeweils zuständigen Schutzgerät abgeschaltet werden. Nach der Fehlerklärung kann die Pendelung auf dem verbleibenden Teil des Energieversorgungsnetzes fortgesetzt werden. In einem solchen Falle muss das Distanzschutzgerät die Beendigung des Fehlers und die fortgesetzte Pendelung erkennen. Daher sieht eine weitere vorteilhafte Ausführungsform des erfindungsgemäßen Verfahrens sowohl bei symmetrischen als auch bei unsymmetrischen Pendelungen vor, dass bei anstehendem Fehlersignal kontinuierlich geprüft wird, ob der Fehler noch vorliegt, und das Fehlersignal zurückgenommen wird, wenn die Überprüfung ergibt, dass kein Fehler mehr vorliegt.

Konkret kann in diesem Zusammenhang vorgesehen sein, dass bei einem einpoligen Fehler zur Überprüfung, ob der Fehler noch vorliegt, bezüglich der fehlerbehafteten Phase berechnete Impedanzwerte mit bezüglich der fehlerfreien Phasen berechneten Impedanzwerten verglichen werden, und anhand des Vergleichs auf das Vorliegen des Fehlers geschlossen wird. Dieser Ausführungsform liegt die Erkenntnis zugrunde, dass die Impedanzwerte einer fehlerbehafteten Phase nahezu konstant auf einer Stelle verharren, während die Impedanzwerte von fehlerfreien Phasen, auf denen eine Pendelung stattfindet, sich kontinuierlich bezüglich Amplitude und/oder Phasenwinkel verändern.

In diesem Zusammenhang kann beispielsweise vorgesehen sein, dass die bezüglich der fehlerbehafteten Phase berechneten Impedanzwerte mit den bezüglich der fehlerfreien Phasen berechneten Impedanzwerten derart verglichen werden, dass auf ein Ende des Fehlers geschlossen wird, wenn die von den jeweiligen aufeinanderfolgenden Impedanzwerten überstrichene Strecken ("Impedanzstrecken") annähernd gleich sind. Bei dieser Überprüfung werden folglich die von den jeweiligen Impedanzwerten zurückgelegten Strecken miteinander verglichen und es wird auf die Beendigung des Fehlers geschlossen, wenn sich alle Impedanzwerte im gleichen Maße verändern, d.h., wenn die Differenz der bezüglich der fehlerbehafteten Phase ermittelten Impedanzstrecke und zumindest einer der bezüglich der fehlerfreien Phasen ermittelten Impedanzstrecke einen Schwellenwert unterschreitet. Dies weist nämlich darauf hin, dass die fehlerbehaftete Phase nunmehr wieder im gleichen Maße eine Pendelung vollführt wie die anderen Phasen.

Zur Erhöhung der Zuverlässigkeit der Erkennung der Fehlerbeendigung bei einem einpoligen Fehler kann zudem vorgesehen sein, dass die symmetrischen Komponenten der Phasenströme bestimmt werden und auch anhand eines Vergleichs der symmetrischen Komponenten darauf geschlossen wird, ob der Fehler noch vorliegt. Hierdurch kann nämlich eine Wiederherstellung des symmetrischen Zustands des Energieversorgungsnetzes erkannt werden. Dieses Zusatzkriterium ist natürlich nur für den Fall einer symmetrischen Pendelung anwendbar, da im Falle einer unsymmetrischen Pendelung nach Beendigung des Fehlers kein symmetrischer Zustand wiederhergestellt würde.

Zur Überprüfung des letztgenannten Kriteriums kann konkret vorgesehen sein, dass die Summe aus dem Nullsystemstrom und dem Gegensystemstrom mit dem Mitsystemstrom verglichen wird, und ein Hinweis auf die Beendigung eines Fehlers erkannt wird, wenn das Produkt aus der Summe und einem Faktor unterhalb des Mitsystemstroms liegt.

Gemäß einer weiteren vorteilhaften Weiterbildung des erfinderischen Verfahrens kann ferner vorgesehen sein, dass bei einem zweipoligen Fehler zur Überprüfung, ob der Fehler noch vorliegt, jeweils aus bezüglich der fehlerfreien Phase und einer der beiden fehlerbehafteten Phasen erfassten Phasenströmen sowie aus angenommenen Phasenströmen für eine fiktive Phase, die um 120° bezüglich der fehlerfreien Phase verschoben (d.h. der entsprechende Stromzeiger ist um 120° gedreht) ist, Test-Gegensystemstromwerte berechnet werden und diese Test-Gegensystemstromwerte mit anhand der tatsächlichen Phasenströme berechneten Gegensystemstromwerten verglichen werden, und auf ein Ende des Fehlers bezüglich der jeweiligen betrachteten fehlerbehafteten Phase geschlossen wird, wenn der Quotient aus den jeweiligen Gegensystemstromwerten und den jeweiligen Test-Gegensystemstromwerten einen vorgegebenen Schwellenwert überschreitet. Diese Überprüfung wird einzeln für jede der beiden fehlerbehafteten Phasen durchgeführt, so dass für jede Phase die Beendigung des Fehlers erkannt werden kann. Bei der beschriebenen Überprüfung wird quasi ein zweipoliger Fehler auf zwei einpolige Fehler abgebildet, indem jeweils eine fehlerbehaftete Phase ausgeblendet und durch eine gedachte pendelnde Phase ersetzt wird. Bezüglich der verbleibenden fehlerbehafteten Phase kann dann durch das beschriebene Verfahren eine Aussage über ein Fortbestehen oder ein Ende des Fehlers getroffen werden.

Die oben genannte Aufgabe wird auch durch ein elektrisches Schutzgerät gelöst, das eine Steuereinrichtung aufweist, die zur Durchführung des oben beschriebenen Verfahrens oder einer seiner Weiterbildungen eingerichtet ist.

Die Erfindung wird im Folgenden anhand von Ausführungsbeispielen näher erläutert. Hierzu zeigen:

Figur 1    eine schematische Darstellung eines Abschnitts eines elektrischen Energieversorgungsnetzes,

Figur 2    eine Darstellung einer von einem Fehler überlagerten Pendelung in einer komplexen Impedanzebene,

Figur 3    eine schematische Übersicht über ein Ausführungsbeispiel eines Verfahrens zum Erzeugen und Zurücknehmen eines Fehlersignals,

Figur 4    ein schematisches Verfahrensfließbild zur Erläuterung einer Fehlererkennung im Fall einer symmetrischen Pendelung,

Figur 5    ein schematisches Verfahrensfließbild zur Erläuterung der Erkennung eines Fehlers im Falle einer unsymmetrischen Pendelung,

Figur 6    drei R-X-Diagramme zur Erläuterung einer Pendelung bei gleichzeitigem einpoligen Fehler,

Figur 7    ein schematisches Verfahrensfließbild zur Erläuterung einer Überprüfung des Fortbestehens eines einpoligen Fehlers während einer Pendelung,

Figur 8    drei Stromzeiger-Diagramme zur Erläuterung der Vorgehensweise hinsichtlich der Überprüfung des Fortbestehens eines zweipoligen Fehlers während einer Pendelung,

Figur 9    ein schematisches Verfahrensfließbild zur Erläuterung der Überprüfung eines Fortbestehens eines zweipoligen Fehlers während einer Pendelung,

Figur 10   ein Diagramm mit einem ersten Beispiel möglicher Verläufe von Gegensystemströmen und TestGegensystemströmen und

Figur 11   ein Diagramm mit einem zweiten Beispiel möglicher Verläufe von Gegensystemströmen und TestGegensystemströmen.

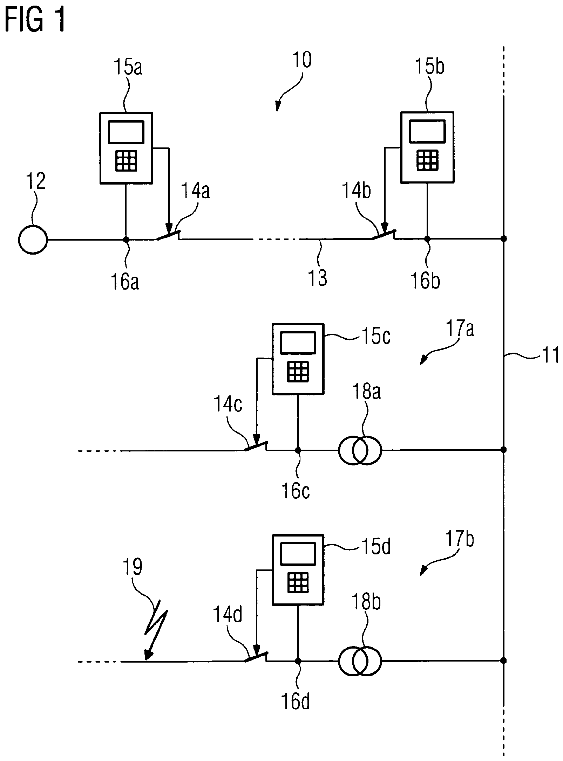

Figur 1 zeigt beispielhaft einen Abschnitt 10 eines im weiteren nicht näher dargestellten dreiphasigen elektrischen Energieversorgungsnetzes. Der Abschnitt 10 des elektrischen Energieversorgungsnetzes ist durch einen Generator 12 mit elektrischer Energie gespeist. Zwischen dem Generator 12 und einer Sammelschiene 11 befindet sich eine schematisch angedeutete dreiphasige Energieübertragungsleitung 13. Die Energieübertragungsleitung 13 ist mit Leistungsschaltern 14a und 14b versehen, mittels denen die Energieübertragungsleitung 13 vom restlichen Teil des Abschnitts 10 des elektrischen Energieversorgungsnetzes abgetrennt werden kann.

Zur Überwachung der Energieübertragungsleitungen 13 auf möglicherweise auftretende Fehler, wie beispielsweise Kurzschlüsse oder Erdschlüsse, sind Schutzgeräte 15a und 15b vorgesehen, bei denen es sich um sogenannte Distanzschutzgeräte handelt. Die Schutzgeräte 15a und 15b nehmen an Messstellen 16a und 16b Messwerte in Form von Strom- und Spannungsmesswerten auf und entscheiden anhand dieser Messwerte über einen zulässigen oder einen unzulässigen Betriebszustand auf der Energieübertragungsleitung 13. Die nähere Funktionsweise eines Distanzschutzgerätes wurde bereits eingangs näher erläutert und soll daher an dieser Stelle nicht nochmals ausführlich behandelt werden.

Sofern eines der Schutzgeräte 15a bzw. 15b oder beide einen unzulässigen Betriebszustand auf der ihnen zugeordneten Energieübertragungsleitung 13 erkannt haben, wird ein Auslösesignal an den jeweiligen Leistungsschalter 14a bzw. 14b abgegeben, um die fehlerbehaftete Energieübertragungsleitung 13 vom restlichen Abschnitt 10 des elektrischen Energieversorgungsnetzes zu trennen. In diesem Zusammenhang kann auch die Übersendung eines Fehlersignals an das gegenüberliegende Ende der fehlerbehafteten Energieversorgungsleitung gesendet werden, um das dortige Schutzgerät auch zum Erzeugen eines entsprechenden Auslösesignals für seinen Leistungsschalter zu veranlassen. Bei einem auf der unmittelbar von dem jeweiligen Schutzgerät überwachten Energieübertragungsleitung auftretenden Fehler wird wie eingangs bereits erwähnt auch von einem "internen" Fehler gesprochen.

Mit der Sammelschiene 11 stehen außerdem zwei Abzweige 17a und 17b in Verbindung. Ein erster Transformator 18a, beispielsweise ein Mittelspannungs-Transformator, transformiert hinsichtlich des ersten Abzweigs 17a die auf der Sammelschiene 11 anstehende Spannung auf ein entsprechendes Niveau (beispielsweise ein Mittelspannungsniveau) herunter. Entsprechendes erfolgt über einen zweiten Transformator 18b hinsichtlich des zweiten Abzweigs 17b.

Die Abzweige 17a und 17b können über weitere Leistungsschalter 14c und 14d im Fehlerfalle von der Sammelschiene 11 getrennt werden. Hierzu sind weitere Schutzgeräte 15c und 15d vorgesehen, bei denen es sich auch um Distanzschutzgeräte handeln kann. Diese nehmen an Messstellen 16c und 16d Messwerte auf und entscheiden anhand dieser Messwerte darüber, ob auf den Abzweigen 17a bzw. 17b ein zulässiger oder ein unzulässiger Betriebszustand vorliegt.

Im Falle der Figur 1 soll beispielhaft an einer durch ein Blitzsymbol gekennzeichneten Fehlerstelle 19 auf dem Abzweig 17b ein ein- oder zweipoliger Fehler, beispielsweise ein Erdkurzschluss, aufgetreten sein. Diesen Fehler müsste das unmittelbar für den Abzweig 17b zuständige Schutzgerät 15d erkennen und den ihm zugeordneten Leistungsschalter 14d zum Trennen seiner Schaltkontakte veranlassen, um den Abzweig 17b von der Sammelschiene 11 zu trennen und so eine Auswirkung des Fehlers auf dem restlichen Teil des Abschnitts 10 des elektrischen Energieversorgungsnetzes zu verhindern. Für den Fall, dass der Fehler an der Fehlerstelle 19 von dem zuständigen Schutzgerät 15d jedoch nicht erkannt werden sollte, beispielsweise aufgrund einer Funktionsstörung des Schutzgerätes 15d, sind die Schutzgeräte 15a und 15b als Reserve-Schutzgeräte eingerichtet. Sie senden nach Ablauf einer Zeitverzögerung, innerhalb der dem Schutzgerät 15d Gelegenheit gegeben wird, auf den Fehler an der Fehlerstelle 19 zu reagieren, ein Auslösesignal an ihren jeweiligen Leistungsschalter, um auf diese Weise den Fehler an der Stelle 19 abzuschalten.

Bei dem Beispiel gemäß Figur 1 würden in diesem Fall zunächst Schutzgerät 15b seinen Leistungsschalter 14b öffnen, während Schutzgerät 15a nur für den Fall, dass auch Schutzgerät 15b den Fehler nicht abschalten, eine Abschaltung vornehmen würden. Die Schutzgeräte 15a und 15b nehmen den an der Stelle 19 aufgetretenen Fehler zunächst als sogenannten externen Fehler wahr, da dieser nicht in der ihnen unmittelbar zugeordneten Schutzzone, in diesem Fall der Energieübertragungsleitung 13 bzw. der Sammelschiene 11 liegt.

Die Erkennung von internen oder externen Fehlern auf dem Abschnitt 10 des elektrischen Energieversorgungsnetzes kann durch eine gleichzeitig stattfindende Pendelung auf dem Abschnitt des elektrischen Energieversorgungsnetzes erschwert werden.

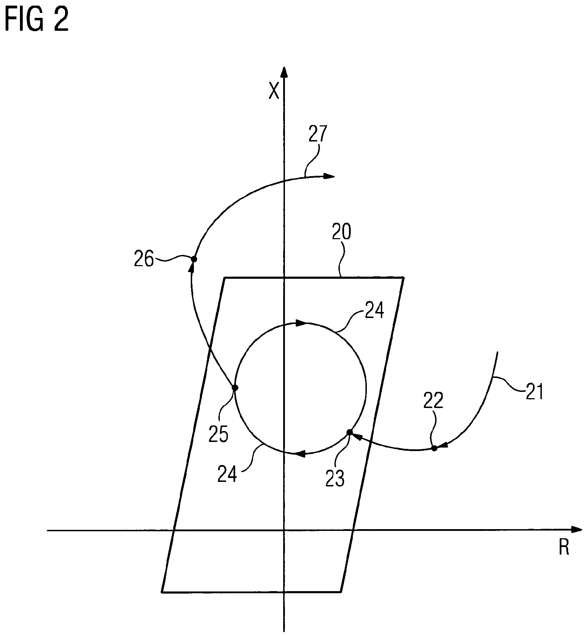

Figur 2 zeigt hierzu beispielhaft in einem sogenannten R-X-Diagramm den Verlauf von Impedanzwerten, die im Falle eines externen Fehlers bei gleichzeitig auftretender Pendelung aufgenommen werden. Die folgende Erläuterung soll beispielhaft für das Schutzgerät 15b gemäß Figur 1 erfolgen.

In einem R-X-Diagramm werden Impedanzwerte in der komplexen Impedanzebene, also in Form sogenannter komplexer Zahlen mit Real- und Imaginäranteilen, dargestellt. Während auf der mit "R" beschrifteten Achse der Realanteil der Impedanz dargestellt ist, der auch als sogenannter Resistanzanteil bezeichnet wird und den ohmschen Widerstandsanteil der Impedanz angibt, wird auf der mit "X" bezeichneten Achse der imaginäre Anteil der Impedanz dargestellt, der auch als sogenannte Reaktanz bezeichnet wird und den induktiven und/oder kapazitiven Teil der Impedanzwerte angibt.

Jeder Impedanzwert wird durch an einer jeweiligen Messstelle, im vorliegenden Beispiel die Messstelle 16b in Figur 1, aufgenommene Strom- und Spannungsmesswerte, bei denen es sich üblicherweise um Amplitude und Phasenwinkel beinhaltende Strom- und Spannungszeigermesswerte handelt, bestimmt. Die jeweiligen Impedanzwerte werden ebenfalls durch Amplitude und Phasenwinkel in Form eines sogenannten Impedanzzeigers dargestellt, der vom Nullpunkt des R-X-Diagramms ausgehend zu dem die entsprechende Amplitude und entsprechenden Phasenwinkel darstellenden Wert verläuft. Im R-X-Diagramm in Figur 2 ist der Übersichtlichkeit halber jeweils nur der Verlauf der Zeigerspitzen als Kurvenverlauf dargestellt.

Innerhalb des R-X-Diagramms ist ein sogenanntes Auslösepolygon 20 dargestellt, das denjenigen Bereich in der Impedanzebene angibt, der von Impedanzwerten während interner oder externer Fehler üblicherweise angenommen wird. Liegen die Impedanzwerte innerhalb des Auslösepolygons wird normalerweise ein Auslösesignal erzeugt, um den entsprechenden Leistungsschalter zu öffnen.

Beispielhaft soll anhand von Figur 2 der Verlauf von Impedanzwerten im Falle einer Pendelung dargestellt werden, die durch einen externen Fehler, wie beispielsweise dem Fehler an der Fehlerstelle 19 (vgl. Figur 1), überlagert wird.

Ein erster Kurvenverlauf 21 beschreibt den Verlauf der Impedanzwerte bei einer Pendelung im fehlerfreien Fall. Eine solche Pendelung kann anhand gängiger Verfahren, wie beispielsweise der eingangs erläuterten Überprüfungen auf Monotonie, Kontinuität und Sprunghaftigkeit der Impedanzwerte, erkannt werden. Ebenso kann eine Aussage darüber getroffen werden, ob die Pendelung symmetrisch, d. h. auf allen drei Phasenleitern gleichmäßig, stattfindet oder ob eine unsymmetrische Pendelung vorliegt.

An der Stelle 23 im R-X-Diagramm gemäß Figur 2 tritt der externe Fehler ein; die Impedanzwerte springen dabei von Stelle 22 an die Stelle 23 innerhalb des Auslösepolygons 20. Während des externen Fehlers verlaufen die Impedanzwerte aufgrund der Überlagerung durch die gleichzeitig weiter stattfindende Pendelung auf einer elliptischen Bahnkurve 24, deren Durchmesser jedoch kleiner ist als der Durchmesser der Bahnkurve 21 bei der Pendelung im fehlerfreien Fall. Die Bahnkurve 24 kann bis zur Abschaltung des Fehlers wiederholt durchlaufen werden.

Nach Klärung des externen Fehlers durch das Schutzgerät 15e an Stelle 25 des R-X-Diagramms springt der Verlauf der Impedanzwerte wieder auf einen Wert an Stelle 26, die außerhalb des Auslösepolygons 20 liegt, und zeigt nachfolgend wieder den elliptischen Bahnkurvenverlauf 27 während der Pendelung, die nunmehr nicht mehr von einem Fehler überlagert ist.

Das Schutzgerät 15b muss daher in dem vorliegenden Beispiel in der Lage sein, den Eintritt des externen Fehlers während einer Pendelung an Stelle 23 sowie die Beendigung des externen Fehlers an Stelle 25 und die Fortsetzung der Pendelung ab Stelle 26 zu erkennen. Nur wenn eine solche Erkennung zuverlässig durchgeführt werden kann, kann das Schutzgerät 15b weiter als Reserve-Schutzgerät für das Schutzgerät 15d eingesetzt werden.

Konkret muss die Funktionsweise des Schutzgeräts 15b für den in Figur 2 dargestellten Fall wie folgt aussehen: Während des Verlaufs 21 muss das Schutzgerät 15b die stattfindende Pendelung erkennen und ein sogenanntes Pendelsignal abgeben, das einerseits die Pendelung anzeigt und andererseits die Distanzschutzfunktion daran hindert, ein Auslösesignal an einen Leistungsschalter abzugeben, wenn bei fortgesetzter Pendelung die Impedanzwerte in das Auslösepolygon eintreten würden. An Stelle 22 muss das Schutzgerät 15b das Auftreten eines externen Fehlers erkennen und ein Fehlersignal erzeugen, das das Vorliegen des Fehlers während der Pendelung anzeigt. Das Fehlersignal bewirkt eine Zurücknahme oder zumindest eine Blockierung des Pendelsignals. Das Fehlersignal muss während des Vorhandenseins des externen Fehlers im Bereich 24 trotz der dort zusätzlich stattfindenden Pendelung aufrechterhalten werden, d. h. trotz charakteristischer Merkmale einer Pendelung im Bereich 24 muss das Schutzgerät 15b den Bereich 24 nicht als Pendelung, sondern als Fehler erkennen, damit es seine Reserve-Schutzfunktion für das Schutzgerät 15e wahrnehmen kann.

Sollte nämlich das Schutzgerät 15d nicht innerhalb der ihm zugewiesenen Zeitspanne den Fehler an der Fehlerstelle 19 abschalten, so würde das Schutzgerät 15b, wie bereits zu Figur 1 erläutert, seinen zugehörigen Leistungsschalter öffnen.

Das Schutzgerät 15b muss ferner an Stelle 26, sobald der externe Fehler durch das Schutzgerät 15d geklärt, d. h. abgeschaltet worden ist, die Beendigung des Fehlers erkennen und das Fehlersignal zurücknehmen, um ab dem Beginn des Verlaufs 27 die Fortsetzung der Pendelung durch erneutes Erzeugen des Pendelsignals wieder angeben zu können.

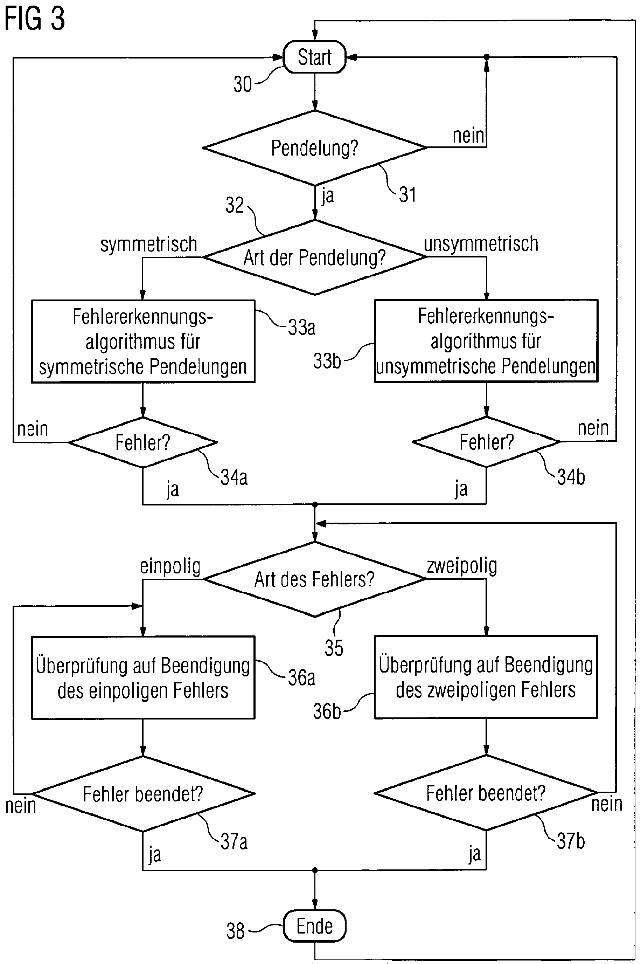

Anhand der folgenden Figuren soll erläutert werden, wie die beschriebene Funktionsweise erreicht werden kann. Hierzu ist zunächst in Figur 3 eine schematische Übersicht über den vollständigen Algorithmus in Form eines Verfahrensfließbildes angegeben. Ein solcher Algorithmus ist üblicherweise in Form einer Gerätesoftware implementiert, die von einer Steuereinrichtung eines Schutzgerätes abgearbeitet wird.

Bei Schritt 30 beginnt die Überprüfung. Zunächst findet bei Schritt 31 eine Überprüfung darauf hin statt, ob eine Pendelung in dem elektrischen Energieversorgungsnetz vorliegt. Hierzu werden beispielsweise aus Strom- und Spannungsmesswerten berechnete Impedanzwerte auf Monotonie, Kontinuität und sprunghaftes Verhalten geprüft. Bewegt sich der von den Impedanzwerten beschriebene Kurvenverlauf monoton, kontinuierlich und ohne Sprünge, wird eine Pendelung erkannt und ein Pendelsignal erzeugt. Findet keine Pendelung statt, beginnt der Algorithmus erneut bei Schritt 30.

Liegt eine Pendelung vor, so wird bei Schritt 32 überprüft, ob es um sich eine symmetrische oder eine unsymmetrische Pendelung handelt. Dies kann z.B. dadurch erfolgen, dass die oben beschriebene Überprüfung auf eine Pendelung für jede Phase des elektrischen Energieversorgungsnetzes durchgeführt wird und im Falle einer gleichmäßigen Pendelung in allen drei Phasen auf eine symmetrische Pendelung geschlossen wird, während im Falle einer phasenweise voneinander abweichenden Pendelung oder einer auf nur eine oder zwei Phasen beschränkten Pendelung eine unsymmetrische Pendelung erkannt wird. Eine symmetrische Pendelung kann auch dadurch erkannt werden, dass für eine Phase eine Pendelung erkannt worden ist, und anhand der symmetrischen Komponenten des Stromes, d.h. Mitsystemstrom, Gegensystemstrom und Nullsystemstrom, ein symmetrisches Verhalten erkannt wird. Im Falle eines symmetrischen Verhaltens existieren im Wesentlichen Mitsystemstrom-Anteile während Nullsystem- und Gegensystemströme kaum auftreten.

Je nachdem, ob eine symmetrische oder unsymmetrische Pendelung erkannt worden ist, wird ein die entsprechende Art der Pendelung anzeigendes Symmetriesignal erzeugt. In Abhängigkeit davon, ob durch das Symmetriesignal eine symmetrische oder eine unsymmetrische Pendelung angezeigt wird, wird in Schritten 33a und 34a bzw. 33b und 34b ein entsprechender Fehlererkennungsalgorithmus für symmetrische bzw. unsymmetrische Pendelungen durchgeführt.

Wird in den Schritten 33a und 34a bzw. 33b und 34b kein Fehler erkannt, so beginnt der Algorithmus erneut an Stelle 30. Wird jedoch ein vorliegender Fehler erkannt, so wird ein Fehlersignal erzeugt und in Schritt 35 die Art des Fehlers daraufhin eingegrenzt, ob sich um einen einpoligen oder einen zweipoligen Fehler handelt. Dies kann beispielsweise dadurch geschehen, dass phasenweise überprüft wird, ob die berechneten Impedanzwerte innerhalb des Auslösepolygons liegen und gleichzeitig entweder keine signifikante Änderung der Impedanzwerte auftritt oder ein sprunghaftes Verhalten im Verlauf der Impedanzwerte erkannt worden ist. Beide Fälle deuten auf einen Fehler in der jeweiligen Phase hin.

Wenn es sich bei dem Fehler um einen internen Fehler handelt, so muss das entsprechende Schutzgerät seinen Leistungsschalter auslösen und damit den fehlerbehafteten Abschnitt aus dem Energieversorgungsnetz abtrennen. In diesem Fall ist das Verfahren bereits vor Schritt 35 beendet und wird ggf. nach Wiedereinschalten des betroffenen Abschnitts erneut gestartet. Liegt ein externer Fehler vor, so wird das Verfahren bei Schritten 36a bzw. 36b fortgesetzt. Die Unterscheidung zwischen einem internen und einem externen Fehler kann z.B. anhand der Lage der berechneten Impedanzwerte im Auslösepolygon erfolgen.

Je nachdem, ob im Schritt 35 ein einpoliger oder ein zweipoliger externer Fehler erkannt worden ist, wird in Schritten 36a und 37a bzw. 36b und 37b eine Überprüfung auf die Beendigung dieses einpoligen bzw. zweipoligen Fehlers durchgeführt. Wird hierbei erkannt, dass der Fehler noch ansteht, d. h. dass er nicht beendet ist, so wird die Überprüfung gemäß der jeweiligen Fehlerart weiter fortgesetzt. Wird der Fehler jedoch als beendet erkannt, so wird das Fehlersignal zurückgenommen und der Algorithmus endet bei Schritt 38 und kann bei Schritt 30 erneut begonnen werden. Sollte der Fehler über eine bestimmte Zeitdauer hinaus vorliegen, d.h. es wird innerhalb dieser Zeit keine Beendigung des Fehlers erkannt, so kann angenommen werden, dass das für den vorliegenden Fehler unmittelbar zuständige Schutzgerät eine Fehlfunktion hat. Das Schutzgerät, das den externen Fehler erkannt hat, kann in diesem Fall in seiner Funktion als Reserveschutzgerät seinen Leistungsschalter öffnen und somit eine Fehlerklärung herbeiführen.

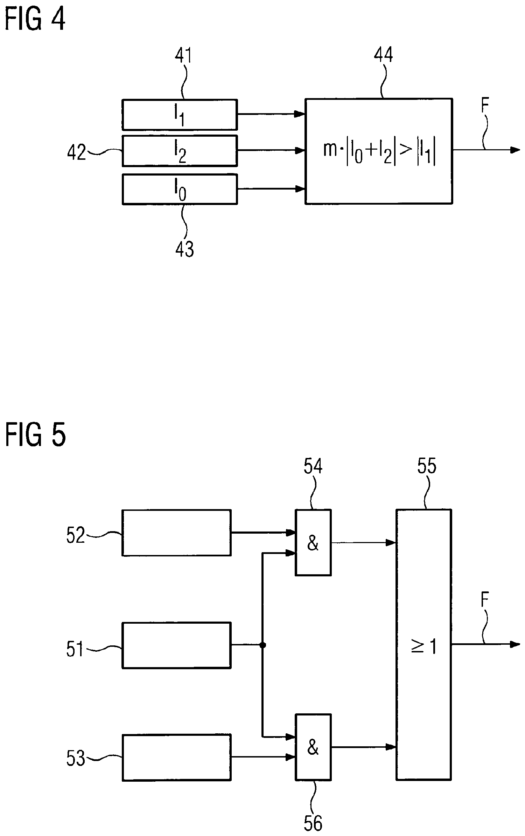

Anhand von Figur 4 soll der im Schritt 33a gemäß Figur 3 durchgeführte Fehlererkennungsalgorithmus im Falle eines eine symmetrische Pendelung angezeigten Symmetriesignals erläutert werden. In diesem Fall kann die Fehlererkennung besonders einfach durchgeführt werden, da lediglich eine Überprüfung auf einen unsymmetrischen Zustand durchgeführt werden muss. Dem liegt die Erkenntnis zugrunde, dass im Falle einer symmetrischen Pendelung eine auftretende Unsymmetrie entweder einen einpoligen oder einen zweipoligen Fehler anzeigen muss. Daher werden gemäß Figur 4 aus den drei Phasenströmen die symmetrischen Komponenten, d.h. im Schritt 41 der sogenannte Mitsystemstrom $I_1$, im Schritt 42 der sogenannte Gegensystemstrom $I_2$ und im Schritt 43 der sogenannte Nullsystemstrom $I_0$, berechnet. Die Bestimmung von Mit-, Gegen- und Nullsystemströmen ist dem Fachmann hinreichend bekannt und soll an dieser Stelle nicht näher erläutert werden.

Im Schritt 44 findet eine Überprüfung daraufhin statt, ob die symmetrischen Komponenten (d. h. Mit-, Gegen- und Nullsystemstrom) einen symmetrischen Zustand oder einen unsymmetrischen Zustand angeben. Ein symmetrischer Zustand liegt dann vor, wenn im Wesentlichen der Mitsystemstrom überwiegt, während Null- und Gegensystemstrom nahezu nicht vorhanden sind. Im Schritt 44 findet daher eine Überprüfung dahingehend statt, ob die mit einem Faktor m multiplizierte Summe aus Gegen- und Mitsystemstrom größer als der Mitsystemstrom ist, wie in folgender Gleichung dargestellt:

$$m \cdot \left| I_0 + I_2 \right| > \left| I_1 \right|$$

Ist diese Ungleichung erfüllt, d. h. Null- und Gegensystemstrom haben einen signifikanten Anteil an den symmetrischen Komponenten, so wird ein unsymmetrischer Zustand und damit ein Fehler erkannt und ein Fehlersignal F erzeugt. Die Höhe des Faktors m kann hierbei vorteilhafterweise in Abhängigkeit von der Höhe des Mitsystemstroms gewählt werden, um bei kleinen Mitsystemströmen ein ggf. vorhandenes Rauschen zu kompensieren. Hierbei steigt der Faktor m bei steigendem Mitsystemstrom und fällt bei sinkendem Mitsystemstrom. Üblicherweise kann der Faktor m im Bereich von etwa 10 bis etwa 160 liegen, im Bereich des Nennstromes, also dem Strom, für den das Energieversorgungsnetz ausgelegt ist, wird ein Wert für den Faktor m von etwa 100 bevorzugt.

In Figur 5 soll der Fehlerkennungsalgorithmus für ein eine unsymmetrische Pendelung anzeigendes Symmetriesignal dargestellt werden (Schritt 33b in Figur 3). Im Falle einer unsymmetrischen Pendelung wird zunächst im Schritt 51 eine Überprüfung durchgeführt, ob die anhand von Strom- und Spannungsmesswerten gebildeten Impedanzwerte innerhalb des Auslösepolygons liegen. Im Schritt 52 wird eine Überprüfung durchgeführt, ob die Impedanzwerte für zeitlich aufeinanderfolgend bestimmte Impedanzwerte nahezu auf einer Stelle stehen geblieben sind, d. h. h. es wird überprüft, ob die Änderung zwischen aufeinanderfolgenden Impedanzwerte einen bestimmten Schwellenwert unterschreitet. Im Schritt 53 wird schließlich überprüft, ob der Verlauf der Impedanzwerte ein sprunghaftes Verhalten aufweist, d. h. ob die Änderung zwischen zwei Impedanzwerten einen vorgegebenen Schwellenwert überschreitet. Sowohl ein Stehenbleiben der Impedanzwerte auf einer Stelle als auch ein sprunghaftes Verhalten sind nämlich eindeutige Merkmale für einen bestehenden Fehler.

Die Ausgänge der Blöcke 51 und 52 werden einem ersten UND-Glied 54 zugeführt, das wiederum ausgangsseitig mit einem Eingang eines ODER-Gliedes 55 verbunden ist. Die Ausgänge der Blöcke 51 und 53 werden einem zweiten UND-Glied 56 zugeführt, das ausgangsseitig mit einem weiteren Eingang des ODER-Gliedes 55 verbunden ist. Durch die hierdurch gegebene logische Verknüpfung wird genau dann ein Fehlersignal ausgangsseitig von dem ODER-Glied 55 abgegeben, wenn die Impedanzwerte innerhalb des Auslösepolygons liegen und gleichzeitig entweder aufeinanderfolgende Impedanzwerte keine signifikante Änderung aufweisen oder ein sprunghaftes Verhalten im Verlauf der Impedanzwerte erkannt worden ist. Diese Überprüfung wird pro Phase durchgeführt, so dass für jede Phase eine Entscheidung darüber getroffen werden kann, ob ein Fehler vorliegt oder nicht.

Der in Figur 5 erläuterte Algorithmus ist dazu geeignet, eine Unterscheidung durchzuführen, ob es sich um einen einpoligen oder einen zweipoligen Fehler handelt. Während daher der Fehlererkennungsalgorithmus für unsymmetrische Pendelungen gemäß Schritt 33b in Figur 3 bereits eine Aussage darüber liefert, ob ein einpoliger oder ein zweipoliger Fehler vorliegt, muss zur Unterscheidung der im Schritt 33a gemäß Figur 3 erkannten Fehler im Schritt 35 zur Unterscheidung der Art des Fehlers nochmals der zu Figur 5 erläuterte Algorithmus durchlaufen werden.

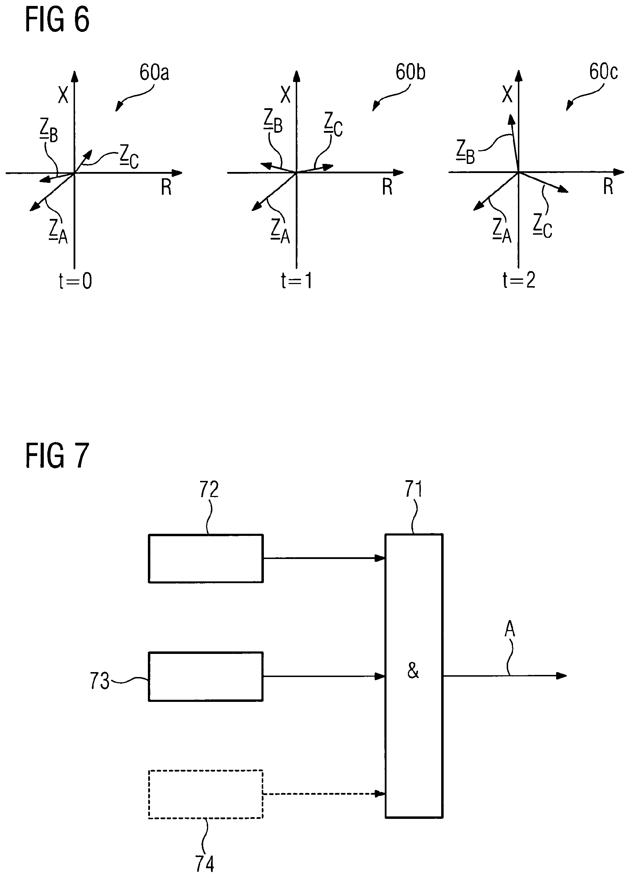

Anhand von Figur 6 soll die Vorgehensweise bei der Überprüfung der Beendigung eines einpoligen Fehlers gemäß Schritt 36a in Figur 3 näher erläutert werden. Figur 6 zeigt drei R-X-Diagramme 60a, 60b und 60c, die zu aufeinanderfolgenden Zeitpunkten (t=0 bis t=2) aufgenommene Impedanzwerte als Impedanzzeiger beinhalten. Während der Impedanzzeiger $\underline{Z}_A$ für Phase A der fehlerbehafteten Phase angehört und auf der durch die Fehlerimpedanz gegebenen Stelle im R-X-Diagramm verharrt, pendeln die Impedanzzeiger $\underline{Z}_B$ und $\underline{Z}_C$ für die Phasen B und C, was durch sich fortlaufend ändernde Amplituden und Phasenwinkel dieser Zeiger ersichtlich ist.

Zunächst bietet sich zur Überprüfung auf Beendigung des einpoligen Fehlers natürlich die inverse Vorgehensweise wie bei der Überprüfung auf das Eintreten eines Fehlers bei symmetrischer Pendelung an, d.h. eine Überprüfung dahingehend, ob ein symmetrischer Zustand wiederhergestellt ist. Wie aus dem R-X-Diagramm 60c für den Zeitpunkt t=2 jedoch deutlich wird, kann ein solcher einfacher Test auf Wiederherstellung eines symmetrischen Zustandes nach einem einpoligen Fehler allein nicht zur Aussage darüber herangezogen werden, ob der einpolige Fehler beendet ist, da trotz weiterem Vorliegen des einpoligen Fehlers die Stellung der Zeiger $\underline{Z}_A$, $\underline{Z}_B$ und $\underline{Z}_C$ im R-X-Diagramm zufälligerweise genau einem symmetrischen Zustand entspricht, d. h. die Amplituden der jeweiligen Zeiger entsprechen sich, während ein Phasenwinkel zwischen den jeweiligen Zeigern von jeweils 120° vorliegt. Ferner kann ein solcher Test auch bei Vorliegen einer unsymmetrischen Pendelung nicht zielführend angewandt werden.

Zur Überprüfung auf die Beendigung eines einpoligen Fehlers werden daher aufeinanderfolgende Impedanzzeiger der fehlerbehafteten Phase A daraufhin überprüft, ob ihr Verlauf im R-X-Diagramm annähernd gleichmäßig mit dem Verlauf der Impedanzzeiger für die fehlerfreien Phasen B und C übereinstimmt. Konkret kann hierzu eine sogenannte "Impedanzstrecke" ermittelt werden, die die Änderung eines Zeigers zwischen zwei oder mehr aufeinanderfolgenden Zeitpunkten angibt. Entsprechen sich die Impedanzstrecken der fehlerbehafteten Phase A und der fehlerfreien Phasen B und C, so kann davon ausgegangen werden, dass die fehlerbehaftete Phase A wieder eine gleichmäßige Pendelbewegung mit den fehlerfreien Phasen B und C durchführt und der Fehler beendet ist. Dieser Test kann zur Vereinfachung auch lediglich bezüglich einer der pendelnden Phasen B oder C durchgeführt werden.

Ein entsprechendes Logik-Diagramm ist in Figur 7 dargestellt. Einem UND-Glied 71 wird demgemäß von einem Block 72 ein Signal zugeführt, wenn es sich um einen einpoligen Fehler handelt. Block 73 vergleicht die Impedanzstrecken für die jeweiligen Impedanzzeiger, d. h. die Änderungen zwischen zu aufeinanderfolgenden Zeitpunkten aufgenommenen Impedanzzeigern bezüglich der fehlerbehafteten Phase A und zumindest einer fehlerfreien Phase B oder C. Liegen bezüglich dieser Impedanzstrecken keine signifikanten Unterschiede vor, so gibt Block 73 ebenfalls ein Ausgangssignal an UND-Glied 71 ab. Das UND-Glied 71 gibt in diesem Fall dann ein Ausgangssignal A ab, das das Fehlersignal, das den einpoligen Fehler anzeigt, zurücknimmt, da in einem solchen Fall nur noch die Pendelung vorliegt und der Fehler beendet ist.

Zusätzlich kann, wie durch einen gestrichelten Block 74 angedeutet ist, eine Überprüfung auf einen symmetrischen Zustand der symmetrischen Komponenten durchgeführt werden; überwiegt das Mitsystem das Gegensystem und das Nullsystem, so wird ein symmetrischer Zustand wieder angenommen:

$$m \cdot \left| I_0 + I_2 \right| < \left| I_1 \right|$$

Für den Faktor m gelten wieder die oben beschriebenen Annahmen. In diesem Fall wird ein Ausgangssignal an das UND-Glied 71 abgegeben und das UND-Glied gibt in diesem Fall nur dann ein Ausgangssignal ab, das zur Zurücknahme des anstehenden Fehlersignals führt, wenn ein symmetrischer Zustand wiederhergestellt worden ist. Die Überprüfung gemäß Block 74 kann jedoch nur dann sinnvoll eingesetzt werden, wenn eine symmetrische Pendelung vorliegt, da im Falle einer unsymmetrischen Pendelung im Block 74 kein symmetrischer Zustand erkannt werden würde.

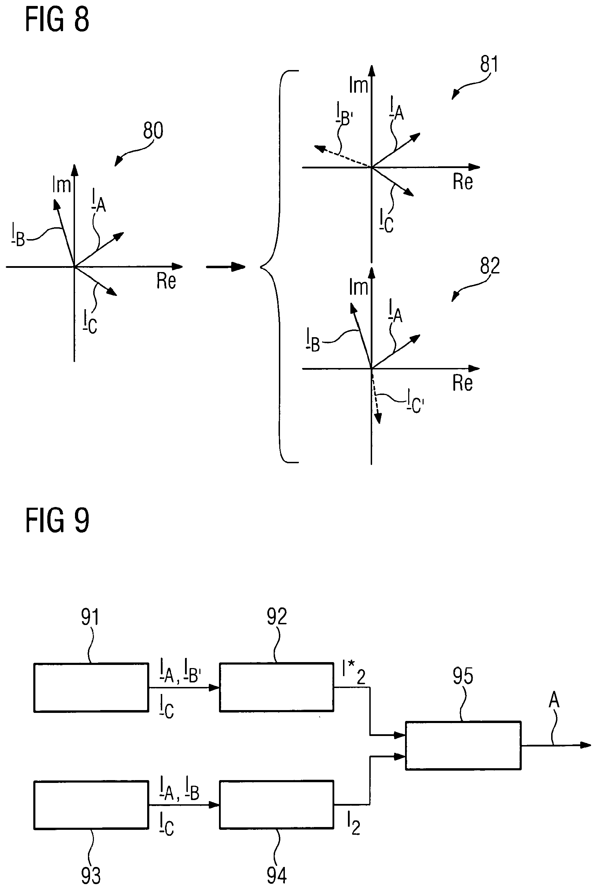

Anhand von Figur 8 soll die Vorgehensweise bei der Überprüfung auf Beendigung eines zweipoligen Fehlers gemäß Schritten 36b und 37b in Figur 3 erläutert werden. Bei einem zweipoligen Fehler reicht die bezüglich des einpoligen Fehlers beschriebene Vorgehensweise unter Verwendung der symmetrischen Komponenten nicht aus, da mit dieser Vorgehensweise nicht zwischen einem einpoligen und einem zweipoligen Fehler unterschieden werden kann. Da es beispielsweise durchaus vorkommen kann, dass bei einem zweipoligen Fehler zunächst nur eine der beiden Phasen wieder geklärt ist und die andere weiterhin fehlerbehaftet bleibt, ist eine solche Unterscheidung zwischen einem anstehenden einpoligen und einem anstehenden zweipoligen Fehler notwendig.

Die Vorgehensweise bei der Beendigung eines zweipoligen Fehlers beinhaltet zunächst eine Abbildung des zweipoligen Fehlers auf zwei einpolige Fehler und eine anschließende Überprüfung. Die Abbildung des zweipoligen Fehlers auf zwei einpolige Fehler wird anhand von Figur 8 näher erläutert. Figur 8 zeigt hierzu ein erstes Stromzeiger-Diagramm 80, in dem Stromzeiger $I_A$, $I_B$ und $I_C$ einer pendelnden Phase A und zweier fehlerbehafteten Phasen B und C dargestellt sind. Zur Überprüfung, ob die Phasen B und C weiterhin fehlerbehaftet sind, wird das im Stromzeiger-Diagramm 80 beschriebene System auf zwei jeweils einen einpoligen Fehler beschreibende Systeme abgebildet, wie in Stromzeiger-Diagrammen 81 und 82 dargestellt ist. Im Stromzeiger-Diagramm 81 ist hierzu der Stromzeiger $I_B$ für die fehlerbehaftete Phase B durch einen angenommenen Stromzeiger $I_B$, einer fiktiven Phase B' ersetzt. Diese fiktive Phase B' wird ebenfalls als pendelnde Phase angenommen und bezieht sich auf die tatsächlich pendelnde Phase A, d. h. der angenommene Stromzeiger $I_B$, hat dieselbe Amplitude wie der Stromzeiger $I_A$ und eine diesbezügliche Phasenverschiebung von 120°. Der Stromzeiger $I_C$ für die fehlerbehaftete Phase C bleibt im Stromzeiger-Diagramm 81 unberührt.

Im dritten Stromzeiger-Diagramm 82 ist entsprechend der Stromzeiger $I_C$ für die fehlerbehaftete Phase C durch einen angenommenen Stromzeiger $I_C$, einer fiktiven Phase C' ersetzt, der bezüglich seiner Amplitude dem Stromzeiger $I_A$ der Phase A entspricht und diesbezüglich einen Phasenwinkel von 120° aufweist. Die fehlerbehaftete Phase B bleibt unberührt.

Das System gemäß Stromzeiger-Diagramm 81 dient dazu, zu überprüfen, ob die Phase C weiterhin fehlerbehaftet ist. Hierzu wird unter Verwendung der Stromzeiger $I_A$, $I_B$, und $I_C$ ein resultierender Test-Gegensystemstrom berechnet. Ebenso wird ein tatsächlicher Gegensystemstrom unter Verwendung der tatsächlichen Stromzeiger $I_A$, $I_B$ und $I_C$ bestimmt und mit dem Test-Gegensystemstrom verglichen. Hierzu wird der Quotient aus dem Gegensystemstrom und dem Test-Gegensystemstrom gebildet. Liegt der Quotient oberhalb einer vorgegebenen Schwelle, beispielsweise oberhalb von 5, so kann daraus geschlossen werden, dass durch das Ersetzen des Stromzeigers $I_B$ für die Phase B durch den angenommenen Stromzeiger $I_B$, ein symmetrisches System wiederhergestellt worden ist. In diesem Fall wird daraus geschlossen, dass die Phase C nicht weiter von dem Fehler betroffen ist.

Entsprechend wird unter Verwendung des Systems gemäß dem Stromzeiger-Diagramm 82 geprüft, ob die Phase B weiterhin von dem Fehler betroffen ist, indem Test-Gegensystemstrom unter Verwendung der Stromzeiger $I_A$, $I_B$ und $I_C$, gebildet wird und mit dem unter Verwendung der tatsächlichen Stromzeiger $I_A$, $I_B$ und $I_C$ gebildeten Gegensystemstrom verglichen wird. Liegt auch hier der Quotient aus dem Gegensystemstrom und dem Test-Gegensystemstrom oberhalb einer bestimmten Schwelle, so kann daraus geschlossen werden, dass die Phase B nicht weiter von dem Fehler betroffen ist. Liegt der Quotient unterhalb der bestimmten Schwelle, so steht der Fehler weiterhin auf der Phase B an.

In Figur 9 ist diese Vorgehensweise Überprüfung nochmals in einem schematischen Ablaufdiagramm dargestellt. Im Schritt 91 wird bezüglich einer der beiden fehlerbehafteten Phasen - beispielhaft sei Phase B angenommen - eine Ersetzung des Stromzeigers $I_B$ durch den angenommenen Stromzeiger $I_B$, vorgenommen. Anschließend wird im Schritt 92 unter Verwendung der Stromzeiger $I_A$, $I_B$, und $I_C$ der Test-Gegensystemstrom berechnet. Im Schritt 93 wird das tatsächlich vorliegende System mit den gemessenen Stromzeigern $I_A$, $I_B$ und $I_C$ verwendet, aus denen im Schritt 94 der tatsächliche Gegensystemstrom berechnet wird. Anschließend wird im Schritt 95 ein Vergleich des Test-Gegensystemstromes mit dem Gegensystemstrom vorgenommen, indem der Quotient aus dem Gegensystemstrom und dem Test-Gegensystemstrom gebildet und mit einem Schwellenwert, beispielsweise dem Wert 5, verglichen wird. Liegt der Quotient oberhalb des Schwellenwertes, so ist diejenige fehlerbehaftete Phase, die nicht ersetzt worden ist - in dem vorliegenden Beispiel also Phase C - nicht weiter von dem Fehler betroffen, während bei Unterschreiten des Schwellenwertes der Fehler bezüglich dieser Phase weiter vorliegt.

Im Block 95 wird daher ein Ausgabesignal A erzeugt, wenn der Schwellenwert überschritten wird und der Fehler bezüglich der betrachteten Phase nicht mehr vorliegt. Dieses Ausgabesignal A kann zur Zurücknahme des Fehlersignals verwendet werden.

Die hier beschriebene Vorgehensweise sollte nicht nur für Phasenströme eines einzigen Zeitpunkts, sondern für einen Verlauf aus mehreren Phasenströmen, die zu aufeinanderfolgenden Zeitpunkten aufgenommen worden sind, durchgeführt werden. Hierdurch kann eine größere Zuverlässigkeit des Ergebnisses erreicht werden, da kurze Schwankungen bezüglich des Gegensystemstroms oder der Test-Gegensystemstroms ausgeglichen werden.

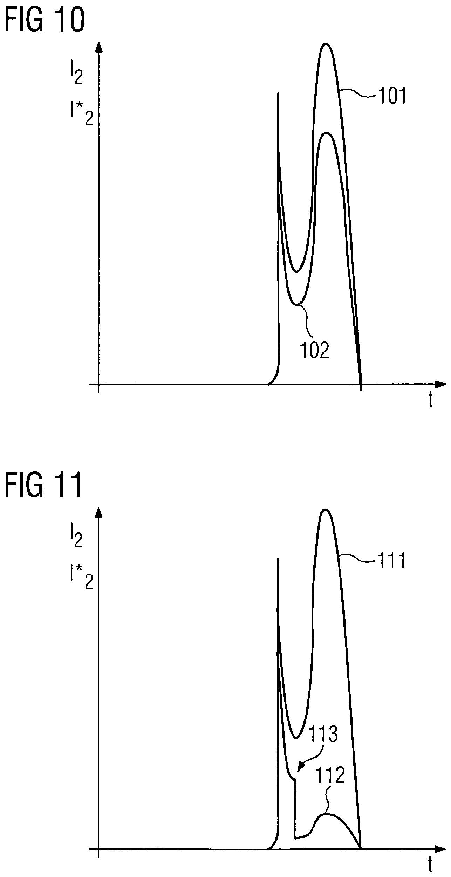

In Figuren 10 und 11 sind jeweils Diagramme dargestellt, in denen der Verlauf des Gegensystemstroms $I_2$ bzw. des Test-Gegensystemstroms $I_2^*$ über der Zeit t aufgetragen ist. Im Diagramm gemäß Figur 10 ist der Verlauf des Gegensystemstroms mit Kurve 101 angegeben, während der Verlauf des Test-Gegensystemstromes mit 102 angegeben ist. Bei den in Figur 10 gezeigten beispielhaften Verläufen ist hinsichtlich der betrachteten Phase keine Fehlerbeendigung aufgetreten.

Entsprechend ist in Figur 11 der Verlauf des Gegensystemstroms mit der Kurve 111 gekennzeichnet, während der Verlauf des Test-Gegensystemstroms mit Kurve 112 bezeichnet ist. Bei den in Figur 11 gezeigten beispielhaften Verläufen ist daher hinsichtlich der betrachteten Phase eine Fehlerbeendigung aufgetreten. Die Klärung des Fehlers erzeugt einen Sprung 113 im Verlauf der Kurve 112.

Man erkennt leicht, dass der aus dem in Figur 11 dargestellten Fall resultierende Quotient aus dem Gegensystemstrom (Kurve 111) und dem Test-Gegensystemstrom (Kurve 112) einen deutlich höheren Wert annimmt als der gemäß Figur 10 resultierende Quotient, der sich aus dem Gegensystemstrom (Kurve 101) und dem Test-Gegensystemstrom (Kurve 102) ergibt. Figur 11 zeigt daher das Ergebnis der Überprüfung für den Fall, dass die untersuchte Phase nicht mehr von dem Fehler betroffen ist, während die untersuchte Phase in dem Fall in Figur 10 weiterhin von dem Fehler betroffen ist.

Zusammengefasst zeigt die Erfindung ein Verfahren, mit dem während einer Pendelung auftretende ein- und zweipolige Fehler schnell und zuverlässig erkannt werden können und im Fall von externen Fehlern auch die fortgesetzte Pendelung nach Beendigung des Fehlers erkannt werden kann. Ein solches Verfahren kann beispielsweise von einer Steuereinrichtung eines elektrischen Distanzschutzgerätes durchgeführt werden und ermöglicht dem Distanzschutzgerät eine zuverlässige und auf den jeweiligen Fall zugeschnittene. Ein Distanzschutzgerät mit einer entsprechend eingerichteten Steuereinrichtung ist daher z.B. in der Lage, auch bei externen Fehlern, die während Pendelungen auftreten, eine Reserve-Schutzfunktion zu übernehmen, da gemäß dem beschriebenen Verfahren das erzeugte und zurückgenommene Fehlersignal zur Zurücknahme eines die Pendelung anzeigenden Pendelsignals verwendet werden kann.

## Patentansprüche

1.  Verfahren zum Erzeugen eines Fehlersignals, das einen einpoligen oder einen zweipoligen Fehler in einem dreiphasigen elektrischen Energieversorgungsnetz anzeigt, der während einer vorliegenden elektrischen Pendelung in dem elektrischen Energieversorgungsnetz aufgetreten ist, wobei das Verfahren die folgenden Schritte aufweist:

> - Erzeugen eines Symmetriesignals während der Pendelung, das anzeigt, ob die Pendelung symmetrisch oder unsymmetrisch ist;
> - Überprüfen der Phasen des elektrischen Energieversorgungsnetzes auf einen vorliegenden Fehler, wobei zur Durchführung der Überprüfung das Symmetriesignal in der Weise herangezogen wird, dass bei einem Symmetriesignal, das eine symmetrische Pendelung anzeigt, zur Überprüfung auf einen vorliegenden Fehler ein anderer Fehlererkennungsalgorithmus verwendet wird als bei einem Symmetriesignal, das eine unsymmetrische Pendelung anzeigt; und
> - Erzeugen des Fehlersignals, wenn bei der Überprüfung ein Fehler erkannt worden ist.

2.  Verfahren nach Anspruch 1,
    **dadurch gekennzeichnet, dass**

> - das Fehlersignal die Zurücknahme eines die Pendelung anzeigenden Pendelsignals bewirkt.

3.  Verfahren nach Anspruch 1 oder 2,
    **dadurch gekennzeichnet, dass**

> - bei einem Symmetriesignal, das eine symmetrische Pendelung anzeigt, aus an dem Energieversorgungsnetz erfassten Phasenströmen die symmetrischen Komponenten in Form eines Mitsystemstroms, eines Gegensystemstroms und eines Nullsystemstroms bestimmt werden, und durch einen Vergleich dieser symmetrischen Komponenten die Überprüfung auf einen vorliegenden Fehler durchgeführt wird.

4.  Verfahren nach Anspruch 3,
    **dadurch gekennzeichnet, dass**

> - zur Überprüfung die Summe aus dem Nullsystemstrom und dem Gegensystemstrom mit dem Mitsystemstrom verglichen wird, und ein Fehler erkannt wird, wenn das Produkt aus der Summe und einem Faktor den Mitsystemstrom übersteigt.

5.  Verfahren nach Anspruch 4,
    **dadurch gekennzeichnet, dass**

> - der Faktor dynamisch an die Höhe des Mitsystemstroms angepasst wird, wobei ein steigender Mitsystemstrom einen Anstieg bei dem Faktor bewirkt.

**6.** Verfahren nach einem Ansprüche 3-5,
**dadurch gekennzeichnet, dass**

- zur Unterscheidung zwischen einem einpoligen und einem zweipoligen Fehler pro Phase eine Überprüfung eines Verlaufs von Impedanzwerten durchgeführt wird; und
- auf das Vorliegen eines Fehlers in der jeweiligen Phase geschlossen wird, wenn

- sich zumindest ein Impedanzwert der betreffenden Phase innerhalb eines Auslösebereichs in der komplexen Impedanzebene befindet und die Änderung zwischen aufeinanderfolgenden Impedanzwerten einen vorgegebenen Schwellenwert unterschreitet; oder
- sich zumindest ein Impedanzwert der betreffenden Phase innerhalb eines Auslösebereichs in der komplexen Impedanzebene befindet und eine sprunghafte Änderung zwischen aufeinanderfolgenden Impedanzwerten aufgetreten ist.

**7.** Verfahren nach Anspruch 1 oder 2,
**dadurch gekennzeichnet, dass**

- bei einem Symmetriesignal, das eine unsymmetrische Pendelung anzeigt, für jede Phase ein Verlauf von Impedanzwerten bestimmt wird und anhand dieses Verlaufs auf das Vorliegen eines Fehlers in der jeweiligen Phase geschlossen wird.

**8.** Verfahren nach Anspruch 7,
**dadurch gekennzeichnet, dass**

- auf das Vorliegen eines Fehler in der jeweiligen Phase geschlossen wird, wenn

- sich zumindest ein Impedanzwert der betreffenden Phase innerhalb eines Auslösebereichs in der komplexen Impedanzebene befindet und die Änderung zwischen aufeinanderfolgenden Impedanzwerten einen vorgegebenen Schwellenwert unterschreitet; oder
- sich zumindest ein Impedanzwert der betreffenden Phase innerhalb eines Auslösebereichs in der komplexen Impedanzebene befindet und eine sprunghafte Änderung zwischen aufeinanderfolgenden Impedanzwerten aufgetreten ist.

**9.** Verfahren nach einem der vorangehenden Ansprüche, **dadurch gekennzeichnet, dass**

- bei anstehendem Fehlersignal kontinuierlich geprüft wird, ob der Fehler noch vorliegt; und
- das Fehlersignal zurückgenommen wird, wenn die Überprüfung ergibt, dass kein Fehler mehr vorliegt.

**10.** Verfahren nach Anspruch 9,
**dadurch gekennzeichnet, dass**

- bei einem einpoligen Fehler zur Überprüfung, ob der Fehler noch vorliegt, bezüglich der fehlerbehafteten Phase berechnete Impedanzwerte mit bezüglich der fehlerfreien Phasen berechneten Impedanzwerten verglichen werden, und anhand des Vergleichs auf das Vorliegen des Fehlers geschlossen wird.

**11.** Verfahren nach Anspruch 10,
**dadurch gekennzeichnet, dass**

- die bezüglich der fehlerbehafteten Phase berechneten Impedanzwerte mit den bezüglich der fehlerfreien Phasen berechneten Impedanzwerten derart verglichen werden, dass auf ein Ende des Fehlers geschlossen wird, wenn die von den jeweiligen aufeinanderfolgenden Impedanzwerten überstrichene Strecke annähernd gleich sind.

**12.** Verfahren nach einem der Ansprüche 10 oder 11,
**dadurch gekennzeichnet, dass**

- die symmetrischen Komponenten der Phasenströme bestimmt werden und auch anhand eines Vergleichs der symmetrischen Komponenten darauf geschlossen wird, ob der Fehler noch vorliegt.

**13.** Verfahren nach Anspruch 12,
**dadurch gekennzeichnet, dass**

- die Summe aus dem Nullsystemstrom und dem Gegensystemstrom mit dem Mitsystemstrom verglichen wird, und ein Hinweis auf die Beendigung eines Fehlers erkannt wird, wenn das Produkt aus der Summe und einem Faktor unterhalb des Mitsystemstroms liegt.

**14.** Verfahren nach Anspruch 9,
**dadurch gekennzeichnet, dass**

- bei einem zweipoligen Fehler zur Überprüfung, ob der Fehler noch vorliegt, jeweils aus bezüglich der fehlerfreien Phase und einer der beiden fehlerbehafteten Phasen erfassten Phasenströmen sowie aus angenommenen Phasenströmen für eine fiktive Phase, die um 120° bezüglich der fehlerfreien Phase verschoben ist, Test-Gegensystemstromwerte berechnet werden und diese Test-Gegensystemstromwerte mit anhand der tatsächlichen Phasenströme berechneten Gegensystemstromwerten verglichen werden, und auf ein Ende des Fehlers bezüglich der jeweiligen betrachteten fehlerbehafteten Phase geschlossen wird, wenn der Quotient aus den jeweiligen Gegensystemstromwerten und den jeweiligen Test-Gegensystemstromwerten einen vorgegebenen Schwellenwert überschreitet.

15. Elektrisches Schutzgerät zum Überwachen eines elektrischen Energieversorgungsnetzes mit

- einer Messeinrichtung zum Erfassen von Messwerten, die Strom und Spannung an einer Messstelle des Energieversorgungsnetzes angeben, und
- einer Steuereinrichtung zum Verarbeiten der Messwerte, **dadurch gekennzeichnet, dass**
- die Steuereinrichtung zur Durchführung eines Verfahrens gemäß einem der Ansprüche 1 bis 14 eingerichtet ist.

**Claims**

1. Method for production of a fault signal which indicates a single-pole or a two-pole fault in a three-phase electrical power supply system, which fault has occurred during a previous electrical oscillation in the electrical power supply system, wherein the method has the following steps:

- production of a balance signal during the oscillation which indicates whether the oscillation is balanced or unbalanced;
- check of the phases of the electrical power supply system for the presence of a fault, wherein the balance signal is used to carry out the check such that, in the case of a balance signal which indicates a balanced oscillation, a different fault identification algorithm is used to check for the presence of a fault than in the case of a balance signal which indicates an unbalanced oscillation; and
- production of the fault signal if a fault has been identified during the check.

2. Method according to Claim 1, **characterized in that**

- the fault signal results in the cancellation of an oscillation signal which indicates the oscillation.

3. Method according to Claim 1 or 2, **characterized in that**

- in the case of a balance signal which indicates a balanced oscillation, the balanced components are determined from phase currents detected in the power supply system, in the form of a positive phase-sequence system current, a negative phase-sequence system current and a zero phase-sequence system current, and the check for the presence of a fault is carried out by a comparison of these balanced components.

4. Method according to Claim 3, **characterized in that**

- for checking, the sum of the zero phase-sequence system current and the negative phase-sequence system current is compared with the positive phase-sequence system current, and a fault is identified if the product of the sum and a factor exceeds the positive phase-sequence system current.

5. Method according to Claim 4, **characterized in that**

- the factor is dynamically matched to the level of the positive phase-sequence system current, wherein a rising positive phase-sequence system current indicates a rise in the factor.

6. Method according to one of Claims 3-5, **characterized in that**

- a check of a profile of impedance values is carried out in order to distinguish between a single-pole and a two-pole fault per phase; and
- the presence of a fault in the respective phase is deduced if

- at least one impedance value of the relevant phase is within a tripping range on the complex impedance plane, and the change between successive impedance values is below a predetermined threshold value; or
- at least one impedance value of the relevant phase is within a tripping range on the complex impedance plane, and a sudden change has occurred between successive impedance values.

7. Method according to Claim 1 or 2, **characterized in that**

- in the case of a balance signal which indicates an unbalanced oscillation, a profile of impedance values is determined for each phase, and the presence of a fault in the respective phase is deduced on the basis of this profile.

**8.** Method according to Claim 7, **characterized in that**

- the presence of a fault in the respective phase is deduced if

- at least one impedance value of the relevant phase is within a tripping range on the complex impedance plane and the change between successive impedance values is below a predetermined threshold value; or
- at least one impedance value of the relevant phase is within a tripping range on the complex impedance plane and a sudden change has occurred between successive impedance values.

**9.** Method according to one of the preceding claims, **characterized in that**

- when a fault signal is present, continuous checking is carried out to determine whether the fault is still present; and
- the fault signal is cancelled if the check indicates that the fault is no longer present.

**10.** Method according to Claim 9, **characterized in that**

- in the case of a single-pole fault, in order to check whether the fault is still present, impedance values calculated with respect to the faulty phase are compared with impedance values calculated with respect to the sound phases, and the presence of the fault is deduced on the basis of the comparison.

**11.** Method according to Claim 10, **characterized in that**

- the impedance values calculated with respect to the faulty phase are compared with the impedance values calculated with respect to the sound phases such that an end of the fault is deduced if the distances covered by the respective successive impedance values are approximately the same.

**12.** Method according to one of Claims 10 or 11, **characterized in that**

- the balanced components of the phase currents are determined, and the balanced components are compared in order to deduce whether the fault is still present.

**13.** Method according to Claim 12, **characterized in that**

- the sum of the zero phase-sequence system current and the negative phase-sequence system current is compared with the positive phase-sequence system current, and an indication of the end of a fault is identified if the product of the sum and a factor is below the positive phase-sequence system current.

**14.** Method according to Claim 9, **characterized in that**

- in the case of a two-pole fault, in order to check whether the fault is still present, test negative phase-sequence system current values are calculated from phase currents detected with respect to the sound phase and one of the two faulty phases and from assumed phase currents for a fictional phase which is shifted through 120° with respect to the sound phase, and these test negative phase-sequence system current values are compared with negative phase-sequence system current values calculated on the basis of the actual phase currents, and an end of the fault is deduced with respect to the respective faulty phase being considered if the quotient of the respective negative phase-sequence system current values and the respective test negative phase-sequence system current values is above a predetermined threshold value.

**15.** Electrical protective device for monitoring an electrical power supply system, having

- a measurement device for detection of measured values which indicate the current and voltage at a measurement point in the power supply system, and
- a control device for processing the measured values, **characterized in that**
- the control device is designed to carry out a method according to one of Claims 1 to 14.

**Revendications**

**1.** Procédé de production d' un signal de défaut, qui indique une défaut monopolaire ou bipolaire dans un réseau d' alimentation électrique triphasé, qui se produit pendant une oscillation électrique en cours dans le réseau d' alimentation en énergie électrique, le procédé ayant les stades suivants :

- production d'un signal de symétrie pendant l'oscillation, qui indique si l'oscillation est symétrique ou est dissymétrique,
- contrôle de la présence d'une défaut dans les phases du réseau d' alimentation en énergie électrique, en mettant à profit pour effectuer le contrôle le signal de symétrie de manière à ce que, pour un signal de symétrie, qui indique une oscillation symétrique, on utilise, pour le contrôle de la présence d'une défaut, un algorithme de détection de défaut autre que pour un signal de symétrie, qui indique une oscillation dissymétrique et

- production du signal de défaut si, dans le contrôle, une défaut a été détectée.

2. Procédé suivant la revendication 1, **caractérisé en ce que**

- le signal de défaut provoque la rétractation d'un signal d'oscillation indiquant l'oscillation.

3. Procédé suivant la revendication 1 ou 2, **caractérisé en ce que**

- pour un signal de symétrie, qui indique une oscillation symétrique, on détermine, à partir de courants de phase détectés sur le réseau d'alimentation en énergie, les composantes symétriques sous la forme d'un courant de système direct, d'un courant de système opposé et d'un courant de système nul, et on effectue le contrôle de la présence d'une défaut par une comparaison de ces composantes symétriques.

4. Procédé suivant la revendication 3, **caractérisé en ce que**

- pour le contrôle, on compare la somme du courant de système nul et du courant de système opposé au courant de système direct et on détecte une défaut si le produit de la somme et d'un autre facteur dépasse le courant de système direct.

5. Procédé suivant la revendication 4, **caractérisé en ce que**

- on adapte le facteur dynamiquement à l'intensité du courant de système direct, un courant de système direct croissant provoquant une augmentation du facteur.

6. Procédé suivant les revendications 3 à 5, **caractérisé en ce que**

- pour distinguer, entre une défaut monopolaire et une défaut bipolaire, on effectue par phase un contrôle d'une courbe de valeurs d'impédance et
- on décide de la présence d'une défaut dans la phase si

- au moins une valeur d'impédance de la phase concernée se trouve, dans le plan d'impédance complexe, dans une zone de déclenchement et la variation entre des valeurs d'impédance successives est inférieure à une valeur de seuil donnée à l'avance ou
- une valeur d'impédance de la phase concernée se trouve à l'intérieur d'une plage de déclenchement dans le plan d'impédance complexe et il se produit une variation brusque entre des valeurs d'impédance successives.

7. Procédé suivant la revendication 1 ou 2, **caractérisé en ce que**

- pour un signal de symétrie, qui indique une oscillation dissymétrique, on détermine pour chaque phase une courbe de valeurs d'impédance et, au moyen de cette courbe, on décide de la présence d'une défaut dans la phase.

8. Procédé suivant la revendication 7, **caractérisé en ce que**

- on décide de la présence d'un défaut dans la phase si

- au moins une valeur d'impédance de la phase concernée se trouve, dans le plan d'impédance complexe, dans une plage de déclenchement et la variation entre des valeurs d'impédance successives est inférieure à une valeur de seuil donnée à l'avance ou
- au moins une valeur d'impédance de la phase concernée se trouve, dans le plan d'impédance complexe, à l'intérieur d'une plage de déclenchement et il se produit une variation brusque entre des valeurs d'impédance successives.

9. Procédé suivant l'une des revendications précédentes, **caractérisé en ce que**

- on contrôle en continu, pour un signal de défaut imminent, si le défaut est encore présent et
- on rétracte le signal de défaut si le contrôle indique qu'il n'y a plus de défaut.

10. Procédé suivant la revendication 9 **caractérisé en ce que**

- pour une défaut monopolaire, on compare, pour contrôler si le défaut est encore présent, les valeurs d'impédance calculées en ce qui concerne la phase affectée d'une défaut, à des valeurs d'impédance calculées pour des phases sans défaut et on décide de la présence de le défaut à l'aide de la comparaison.

11. Procédé suivant la revendication 10, **caractérisé en ce que**

     - on compare les valeurs d'impédance calculées pour la phase affectée d'une défaut, aux valeurs d' impédance calculées pour les phases sans défaut, de manière à décider de la fin du défaut si les intervalles balayés par les valeurs d'impédance successives sont à peu près les mêmes.

12. Procédé suivant l'une des revendications 10 ou 11, **caractérisé en ce que**

     - on détermine les composantes symétriques des courants de phase et on décide également, à l'aide d'une comparaison des composantes symétriques, si le défaut est encore présent.

13. Procédé suivant la revendication 12, **caractérisé en ce que**

     - on compare la somme du courant de système nul et du courant de système opposé au courant de système direct et on détecte une indication de la fin d' une défaut si le produit de la somme et d' un facteur est inférieur au courant de système direct.

14. Procédé suivant la revendication 9, **caractérisé en ce que**

     - pour une défaut bipolaire, pour le contrôle du point de savoir si le défaut est encore présent, on calcule, à partir des courants de phase, en ce qui concerne la phase sans défaut et en ce qui concerne l'une des deux phases affectées de défaut, ainsi qu'à partir des courants de phase supposés, pour un phase fictive, qui est décalée de 120° par rapport à la phase sans défaut, des valeurs de courant de système opposé test et on compare ces valeurs de courant de système opposé test à des valeurs de courant de système opposé calculées à l' aide des courants de phase réels et on décide de la fin du défaut, en ce qui concerne la phase considérée affectée d' un défaut, si le quotient des valeurs de courant du système opposé par les valeurs de courant du système opposé test dépasse une valeur de seuil donnée à l'avance.

15. Appareil de protection électrique pour contrôler un réseau d' alimentation en énergie électrique comprenant

- un dispositif de mesure pour détecter des valeurs de mesure, qui indique le courant et la tension en un point de mesure du réseau d' alimentation en énergie et
- un dispositif de commande pour traiter les valeurs de mesure,

**caractérisé en ce que**

     - le dispositif de commande est conçu pour effectuer un procédé suivant l'une des revendications 1 à 14.

EP 2 301 128 B1

# FIG 1

FIG 2

# FIG 3

FIG 4

$$m \cdot \left| I_0 + I_2 \right| > \left| I_1 \right|$$

FIG 5

FIG 6

60a

X

$\underline{Z}_B$

$\underline{Z}_C$

R

$\underline{Z}_A$

t=0

60b

X

$\underline{Z}_B$   $\underline{Z}_C$

R

$\underline{Z}_A$

t=1

60c

X

$\underline{Z}_B$

R

$\underline{Z}_A$   $\underline{Z}_C$

t=2

FIG 7

72

71

73

&

A

74

FIG 8

FIG 9

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003039086 A